# EUROPEAN PATENT APPLICATION

(11) **EP 2 124 167 A1**
(43) Date of publication of application: **25.11.2009**
(21) Application number: 09152604.6
(22) Date of filing: 11.02.2009
(51) Int. Cl.: G06K 7/00

(54) **Interrogating Device, RFID interrogator, and RFID interrogating method**

(30) Priority: 20.05.2008 JP 2008132480
(71) Applicant: Fujitsu Ltd., Kawasaki-shi, Kanagawa 211-8588 (JP)
(72) Inventor: Tanaka, Yoshinori c/o FUJITSU LIMITED, Kawasaki-shi, Kanagawa 211-8588 (JP)
(74) Representative: Holtby, Christopher Lawrence

(57) **Abstract**

An RFID interrogator includes a data transmitting unit, a data receiving unit, a tag-reception SINR estimating unit, and a transmission controlling unit. The data transmitting unit transmits a transmission signal to an electronic tag. The data receiving unit receives from the electronic tag a response signal in response to the transmission signal within a predetermined time after the transmission signal is transmitted. The tag-reception SINR estimating unit estimates an SINR value related to reception on the electronic tag side as a tag-reception SINR estimation value based on the response signal. The transmission controlling unit variably controls a modulation index of the transmission signal so that the tag-reception SINR estimation value is a reception-allowable predetermined SINR value.

## Description

### FIELD

The embodiment(s) discussed herein is (are) directed to an interrogating device, a radio frequency identification (RFID) interrogator, and an RFID interrogating method.

### BACKGROUND

In recent years, RFID is one of technologies attracting attention in a ubiquitous society. An RFID tag system to which RFID is applied includes an RFID interrogator, such as a reader/writer device or a reader device, and an electronic tag, such as a wireless integrated circuit (IC) tag, a wireless tag, or an RFID tag. Information in the electronic tag attached to an object, such as a product, is read or written by the RFID interrogator, thereby achieving product management.

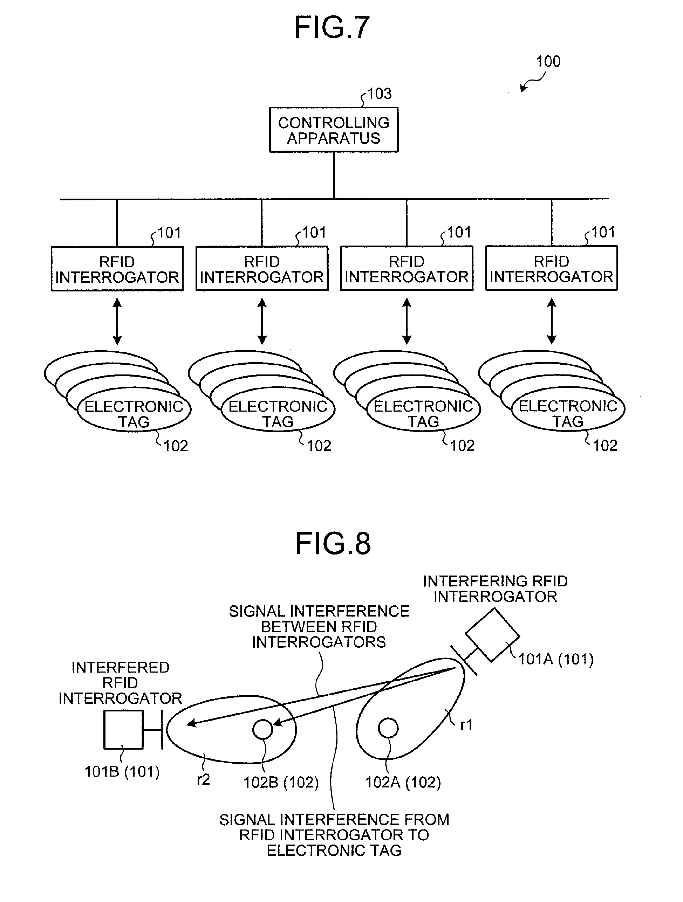

Fig. 7 is a schematic diagram for explaining the system configuration of a general RFID tag system.

An RFID tag system 100 includes a plurality of RFID interrogators 101, a plurality of electronic tags 102 corresponding to the RFID interrogators 101, and a controlling apparatus 103 that centrally manages these RFID interrogators 101. Each RFID interrogator 101 communicates with the electronic tag 102 set as a communication target to read and write information stored in the electronic tag 102.

Fig. 8 is a schematic diagram for explaining signal interference between RFID interrogators 101 and signal interference from one RFID interrogator 101 to the electronic tag 102 of another RFID interrogator 101 in the general RFID tag system 100.

In the RFID tag system 100 depicted in Fig. 8, when these RFID interrogators 101 are densely disposed, it is assumed, for example, that the RFID tag system 100 includes an interfering RFID interrogator 101A interfering with another RFID interrogator 101 and another electronic tag 102 and an interfered RFID interrogator 101B interfered by the interfering RFID interrogator 101A, and an electronic tag 102A is present within a communication area r1 of the interfering RFID interrogator 101A and an electronic tag 102B is present within a communication area r2 of the interfered RFID interrogator 101B.

That is, signal interference occurs between the RFID interrogators 101. Signal interference also occurs from one RFID interrogator 101 to the electronic tag 102 of another RFID interrogator 101.

In signal interference between the RFID interrogators 101, for example, when the interfering RFID interrogator 101A and the interfered RFID interrogator 101B communicate with the relevant electronic tag 102 at the same frequency, a communication signal cannot be identified.

In signal interference from one RFID interrogator 101 to the electronic tag 102 of another RFID interrogator 101, for example, the transmission signal from the interfering RFID interrogator 101A also reaches the electronic tag 102B in the communication area r2 outside the communication area r1. As a result, the electronic tag 102B cannot respond to the transmission signal from the interfered RFID interrogator 101B, which is supposed to communicate with the electronic tag 102B.

To avoid signal interference between the RFID interrogators 101, each RFID interrogator 101 performs carrier sensing before starting communication to search for and use an unused channel (frequency).

In a system of executing carrier sensing, a maximum continuous transmission time during which the RFID interrogator 101 can continuously transmit transmission signals and a minimum transmission stop time during which signal transmission stops after the maximum continuous transmission time are defined in advance. One RFID interrogator 101 waiting for signal transmission takes an opportunity of acquiring a communication channel during the minimum transmission stop time of another RFID interrogator 101 in signal transmission. Therefore, each RFID interrogator 101 can fairly get the transmission opportunities.

However, since an electronic tag 102 does not include a frequency selecting function, even when each RFID interrogator 101 uses a communication channel of a different frequency to transmits a transmission signal to the relevant electronic tag 102, the signal interference from one RFID interrogator 101 to the electronic tag 102 of another RFID interrogator 101 still degrades the performance of the electronic tag 102.

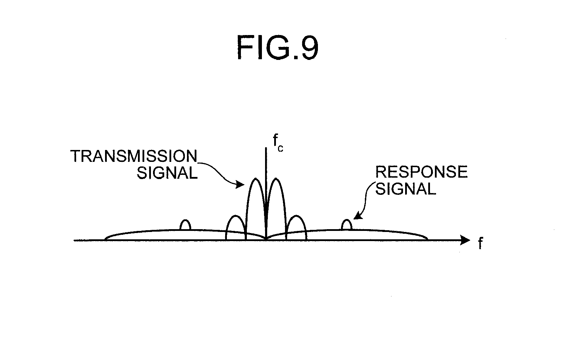

Fig. 9 is a schematic diagram for explaining frequency spectrums of a transmission signal from the RFID interrogator 101 and a response signal from the electronic tag 102 in the general RFID tag system 100.

To avoid signal interference between the RFID interrogators 101, when the electronic tag 102 sends a response signal in response to a transmission signal from the RFID interrogator 101, as depicted in Fig. 9, sub-carrier modulation is used to transmit a response signal (tag back scatter signal) at a frequency away from the spectrum of the transmission signal from the RFID interrogator 101 to decrease an overlap between the spectrum of the transmission signal from the RFID interrogator 101 and the spectrum of the response signal from the electronic tag 102, thereby reducing signal interference between the RFID interrogators 101.

The technologies as above are described in, for example, European Telecommunications Standards Institute, "Electromagnetic compatibility and Radio spectrum Matters (ERM); Radio Frequency Identification Equipment operating in the band 865 MHz to 868 MHz with power levels up to 2W; Part 1: Technical requirements and methods of measurement", ETSI EN 302 208-1, V1. 1. 1, pp. 9, 10, and 26; and EPC global, EPC radio-frequency identify protocols class-1 generation-2 UHF RFID protocol, EPC global standard specification.

The above-described technology does not allow estimation of reception quality on an electronic tag side.

Thus, there is a need for a technology enabling estimation of reception quality on an electronic tag side.

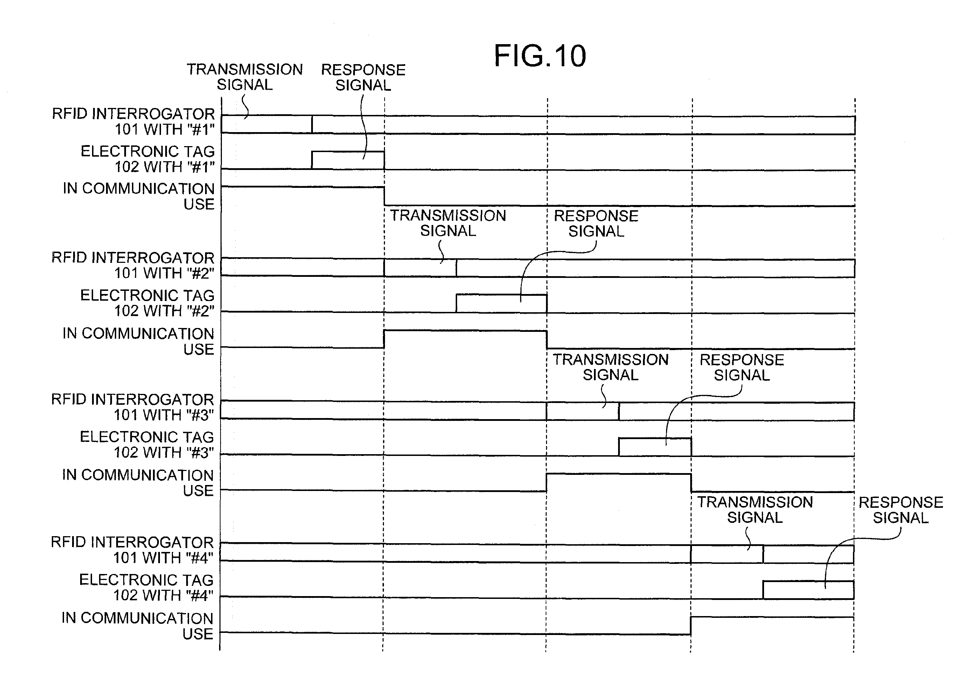

In the method of avoiding signal interference between RFID interrogators 101 explained above, as depicted in Fig. 10, the controlling apparatus 103 executes scheduling through time-division control over each RFID interrogator 101 so that, for example, adjacent RFID interrogators 101 with "#1" to "#4" perform communication by using different time slots. Each RFID interrogator 101 transmits a transmission signal to the electronic tag 102 managed thereby according to the time slot, and then receives a response signal in response to this transmission signal from the electronic tag 102.

However, while the RFID interrogator 101 (RFID interrogator with "#1") allocated a time slot is transmitting a transmission signal, other RFID interrogators 101 (RFID interrogators 101 with "#2" to "#4") each cannot transmit a transmission signal to a relevant one of the electronic tag 102 (electronic tags 102 with "#2" to "#4") managed thereby. For example, if the relevant electronic tag 102 is moving, the RFID interrogator may fail to read data.

Moreover, the controlling apparatus 103 has to make settings and perform control in advance in consideration of an influence of signal interference among the RFID interrogators 101. Therefore, every time the installation environment of the RFID interrogator 101 changes, burdensome settings are required.

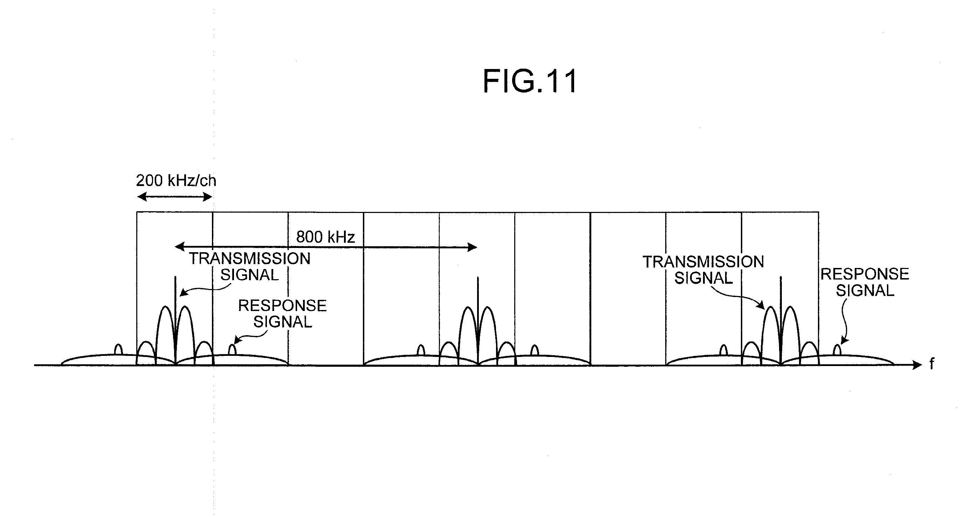

Furthermore, when a response signal from the electronic tag 102 is transmitted through sub-carrier modulation at a frequency away from the spectrum of the transmission signal from the RFID interrogator 101, as depicted in Fig. 11, communication channels at frequencies approximately 1 megahertz (e.g., 800 kilohertz) away from each other are used for communication between adjacent RFID interrogators 101. With this, an influence of interference of the transmission signal on the communication channel assigned for each RFID interrogator 101 over the response signal transmitted from the electronic tag 102 through sub-carrier modulation is reduced. However, for example, when many RFID interrogators 101 are densely disposed, many communication channels have to be allocated, and therefore efficiency of using frequencies is low.

### SUMMARY

It is desirable to at least partially solve the problems in the above-described technology.

According to an aspect of the invention, a radio frequency identification (RFID) interrogator includes: a transmitting unit that transmits a transmission signal to an electronic tag; a receiving unit that receives from the electronic tag a response signal in response to the transmission signal within a predetermined time after the transmission signal is transmitted from the transmitting unit; a tag-reception SINR estimating unit that estimates a signal to interference plus noise ratio (SINR) value related to reception by the electronic tag as a tag-reception SINR estimation value based on the response signal received by the receiving unit from the electronic tag; and a transmission controlling unit that controls the transmitting unit to variably control a modulation index of the transmission signal so that the tag-reception SINR estimation value estimated by the tag-reception SINR estimating unit is above a predetermined required SINR value.

Advantages of the invention may be realized and attained by means of the elements and combinations particularly pointed out in the claims.

It is to be understood that both the foregoing general description and the following detailed description of embodiments of the invention are exemplary and explanatory and are not restrictive of the invention, as claimed.

### BRIEF DESCRIPTION OF DRAWINGS

Fig. 1 is an example schematic diagram for explaining the system configuration of an entire RFID tag system according to a first embodiment;
Fig. 2 is an example schematic block diagram of the configuration of an RFID interrogator according to the first embodiment;
Fig. 3 is an example schematic block diagram of the configuration of an MPU of the RFID interrogator;
Fig. 4 is an example schematic block diagram of the configuration of a tag-reception SINR estimating unit of the MPU;
Fig. 5 is an example flowchart of the operation of a main controlling unit in the MPU related to a first transmission-modulation index updating process according to the first embodiment;
Fig. 6 is an example flowchart of the operation of the main controlling unit in the MPU related to a second transmission-modulation index updating process according to the second embodiment;
Fig. 7 is an example schematic diagram for explaining the system configuration of a general RFID tag system;
Fig. 8 is an example schematic diagram for explaining signal interference between RFID interrogators and signal interference from one RFID interrogator to an electronic tag of another RFID interrogator in the general RFID tag system;
Fig. 9 is an example schematic diagram for explaining frequency spectrums of a transmission signal from the RFID interrogator and a response signal from the electronic tag in the general RFID tag system;
Fig. 10 is an example schematic diagram for explaining the case where a transmission signal from the RFID interrogator and a response signal from the electronic tag are realized in a time division manner in the general RFID tag system; and
Fig. 11 is an example schematic diagram for explaining a relation between a transmission signal from the RFID interrogator and a response signal from the electronic tag in the general RFID tag system.

### DESCRIPTION OF EMBODIMENT(S)

Preferred embodiments of the present invention will be explained with reference to accompanying drawings.

In the embodiments, an electronic tag controls a reflectivity at a reception end (e.g., an antenna) to at least a first reflectivity and a second reflectivity higher than the first reflectivity. Then, an interrogating device (a device that exchanges a signal with the electronic tag) transmits a transmission signal to this electronic tag from a transmitting unit.

Upon receipt of the signal from the interrogating device, the electronic tag controls the reflectivity at the reception end to generate a response signal. Therefore, the interrogating device receives, as a response signal, a signal with its strength changed by controlling the reflectivity to a different reflectivity. Then, an extracting unit of the interrogating device extracts a signal portion of the response signal to which the second reflectivity is applied (a signal portion to which a reflectivity higher than the first reflectivity is applied) according to the strength of the reception signal.

Then, an estimating unit of the interrogating device estimates reception quality at the electronic tag base on the signal portion extracted by the extracting unit. That is, the signal portion reflected by setting a high reflectivity is used to estimate reception quality at the electronic tag.

Preferably, based on the reception quality estimated through the method, a transmitting unit of the interrogating device controls a modulation index to be applied to the transmission signal to be transmitted to the electronic tag.

Alternatively, the modulation index may be controlled by using the reception quality of the response signal itself.

For example, the modulation index is changed within a range of satisfying a predetermined reception quality criterion. In changing the modulation index, the modulation index can be changed to allow highest-speed transmission, while satisfying the predetermined reception quality criterion. When the response signal from the electronic tag is used, the modulation index may be changed for the transmission signal to be transmitted to the electronic tag after the response signal is received.

Based on the response signal from the electronic tag in response to the transmission signal from the RFID interrogator, a signal to interference plus noise ratio (SINR) value related to reception on an electronic tag side is estimated on an RFID interrogator side as a tag-reception SINR estimation value. The modulation index of the transmission signal to be transmitted from the RFID interrogator to the electronic tag is variably controlled so that this estimated tag-reception SINR estimation value is a reception-allowable predetermined SINR value. With this, for example, the modulation index of the transmission signal to be transmitted from the RFID interrogator to the electronic tag can be suppressed as minimum as required.

As a result, in the embodiments, signal interference between RFID interrogators can be suppressed. Furthermore, by narrowing a separation distance between RFID interrogators, high-density arrangement of the RFID interrogators can be ensured. Still further, signal interference with an electronic tag in a communication area of another RFID interrogator, that is, signal interference from the RFID interrogator to the electronic tag, can be suppressed, and the number of ensured communication channels to be allocated can be reduced, thereby improving efficiency of using frequencies.

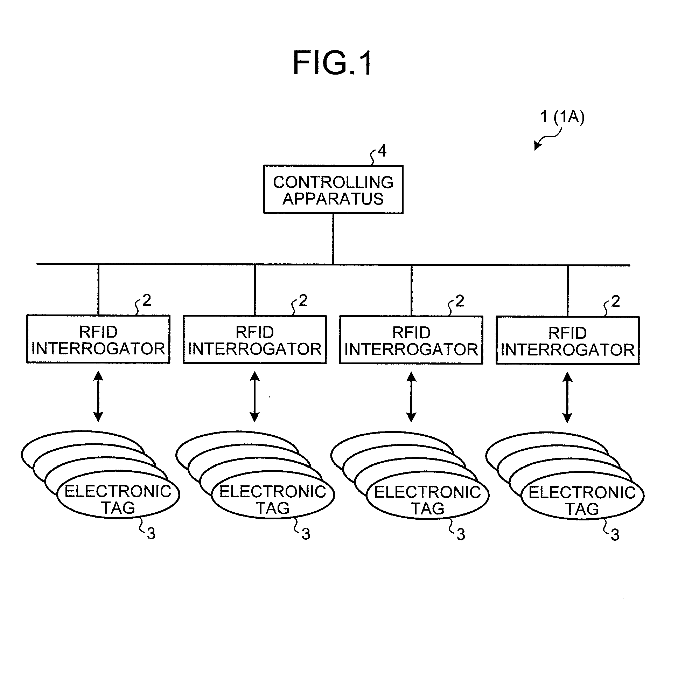

Fig. 1 is a schematic diagram of the system configuration of an entire RFID tag system according to a first embodiment.

An RFID tag system 1 depicted in Fig. 1 includes a plurality of RFID interrogators 2, a plurality of electronic tags 3 corresponding to the respective RFID interrogators 2, and a controlling apparatus 4 that centrically manages the RFID interrogators 2. The RFID interrogators 2 each communicates with the electronic tag 3 set as a communication target to read and write information in the electronic tag 3.

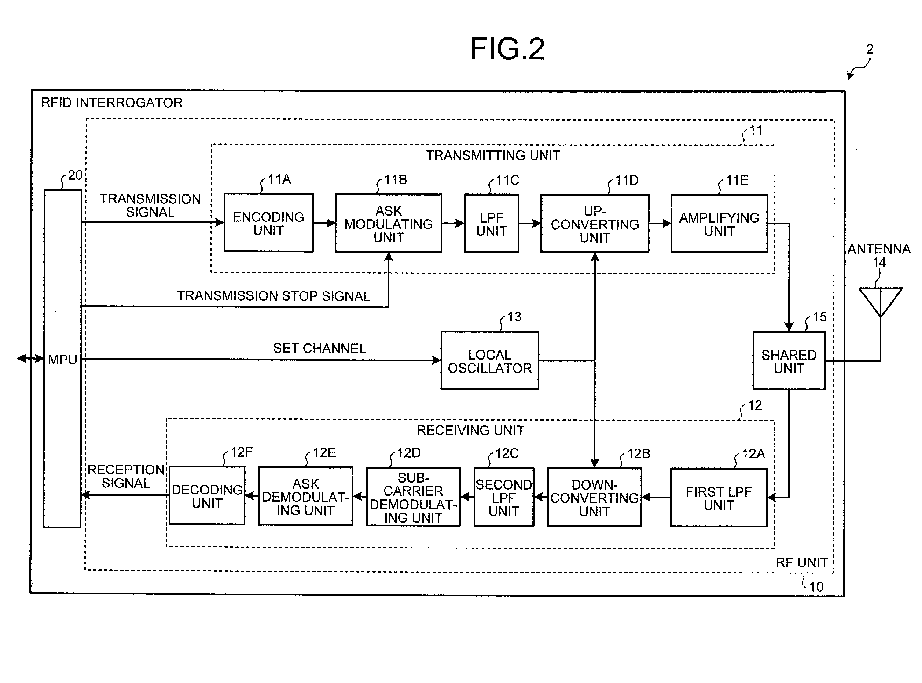

Fig. 2 is a schematic block diagram of the configuration of each RFID interrogator 2 according to the first embodiment.

The RFID interrogator 2 depicted in Fig. 2 includes a radio frequency (RF) unit 10 that is responsible for RFID communication with the electronic tag 3 and a micro processing unit (MPU) 20 that analyzes a transmission signal to be transmitted to the electronic tag 3 and a reception signal received from the electronic tag 3.

The RF unit 10 includes a transmitting unit 11, a receiving unit 12, a local oscillator 13, and a shared unit 15. The transmitting unit 11 transmits a transmission signal from the MPU 20 to the electronic tag 3 via RFID communication. The receiving unit 12 receives a reception signal from the electronic tag 3 via RFID communication. The local oscillator 13 is for use in frequency conversion in the transmitting unit 11 and the receiving unit 12. The shared unit 15 transmits and receives a signal to and from the electronic tag 3 via an antenna 14.

The transmitting unit 11 includes an encoding unit 11A that encodes a transmission signal from the MPU 20 with the Manchester encoding and an Amplitude-shift-keying (ASK) modulating unit 11B that performs amplitude-shift keying (ASK) on the transmission signal encoded by the encoding unit 11A.

The transmitting unit 11 further includes a low- pass filter (LPF) unit 11C, an up-converting unit 11D, and an amplifying unit 11E. An LPF unit 11C performs a filtering process on the transmission signal ASK-modulated by the ASK modulating unit 11B. The up-converting unit 11D converts the communication channel of the transmission signal subjected to the filtering process in the LPF unit 11C to a desired high frequency. The amplifying unit 11E amplifies a gain of a carrier wave obtained through conversion by the up-converting unit 11D to a high frequency.

The encoding unit 11A encodes a transmission signal, such as a write command or a read command, with Manchester encoding or the like.

The ASK modulating unit 11B ASK-modulates the transmission signal encoded by the encoding unit 11A to transmit the encoded bit data as an analog signal. To do this, the ASK modulating unit 11B strengthens or weakens the amplitude of the carrier wave and allocates "0" or "1" according to the difference in strength to transfer the bit data.

The LPF unit 11C performs a filtering process for removing high-frequency components of the transmission signal ASK-modulated by the ASK modulating unit 11B.

The up-converting unit 11D converts the communication channel of the transmission signal with the high-frequency components removed therefrom by the LPF unit 11c to a desired high frequency based on a local oscillation frequency from the local oscillator 13.

The amplifying unit 11E amplifies the gain of the carrier wave frequency-converted by the up-converting unit 11D, and supplies the amplified transmission signal to the shared unit 15 for transmission to the electronic tag 3 via the antenna 14 through RFID communication.

The receiving unit 12 includes a first LPF unit 12A, a down-converting unit 12B, a second LPF unit 12C, and a sub-carrier demodulating unit 12D. The first LPF unit 12A performs a filtering process on the reception signal received from the electronic tag 3 via the antenna 14 and the shared unit 15. The down-converting unit 12B converts the high-frequency carrier wave of the reception signal subjected to the filtering process in the first LPF unit 12A to the original frequency. The second LPF unit 12C performs a filtering process with a base band on the reception signal frequency-converted by the down-converting unit 12B. The sub-carrier demodulating unit 12D performs a sub-carrier demodulating process on the reception signal subjected to the filtering process by the second LPF unit 12C.

The first LPF unit 12A removes high-frequency components of the reception signal received via the antenna 14 and the shared unit 15.

The down-converting unit 12B converts the high-frequency communication channel of the reception signal subjected to the filtering process in the first LPF unit 12A to the original frequency based on the oscillation frequency from the local oscillator 13.

The second LPF unit 12C performs a filtering process with a base band on the reception signal having the original frequency subjected to frequency conversion.

As depicted in Fig. 9, the reception signal includes a response signal with a sub-carrier modulation technique in a reflection signal of the transmission signal from the RFID interrogator 2. Thus, the sub-carrier demodulating unit 12D performs a sub-carrier demodulating process on the reception signal subjected to the filtering process by the second LPF unit 12C.

The receiving unit 12 includes an ASK demodulating unit 12E that ASK-demodulates the reception signal demodulated by the sub-carrier demodulating unit 12D and a decoding unit 12F that decodes the reception signal ASK-demodulated by the ASK demodulating unit 12E.

The ASK demodulating unit 12E ASK-demodulates the reception signal demodulated by the sub-carrier demodulating unit 12D to convert the reception signal to bit data.

The decoding unit 12F decodes the reception signal ASK-demodulated by the ASK demodulating unit 12E to transmit the decoded reception signal to the MPU 20.

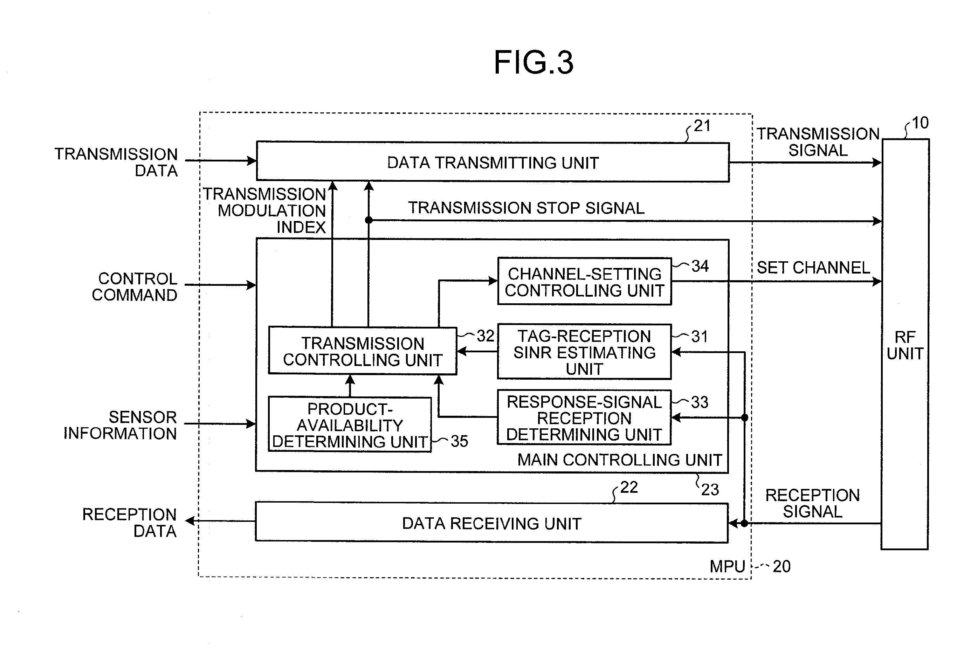

Fig. 3 is a schematic block diagram of the configuration of the MPU 20 of the RFID interrogator 2.

The MPU 20 depicted in Fig. 3 includes a data transmitting unit 21 that transmits transmission data, such as a write command or a read command to the RF unit 10 as a transmission signal, a data receiving unit 22 that receives reception data from the reception signal received by the RF unit 10, and a main controlling unit 23.

The data transmitting unit 21 transmits a transmission signal via the transmitting unit 11 in the RF unit 10, the shared unit 15, and then the antenna 14 to the electronic tag 3.

After the data transmitting unit 21 transmits a transmission signal, the data receiving unit 22 receives the reception signal in response to the transmission signal within a predetermined time from the electronic tag 3 via the antenna 14, the shared unit 15, and then the receiving unit 12 in the RF unit 10.

The main controlling unit 23 includes a tag-reception SINR estimating unit 31 and a transmission controlling unit 32. The tag-reception SINR estimating unit 31 estimates an SINR value related to reception on an electronic tag 3 side as a tag-reception SINR estimation value based on the response signal included in the reception signal from the electronic tag 3 received by the receiving unit 12 in the RF unit 10. The transmission controlling unit 32 controls the data transmitting unit 21 to variably control the modulation index of the transmission signal to be transmitted to the electronic tag 3 of the communication target so that the tag-reception SINR estimation value estimated by the tag-reception SINR estimating unit 31 becomes a reception-allowable predetermined SINR value. Here, the tag-reception SINR estimation value corresponds to an estimation value of estimating reception quality of the electronic tag 3.

Upon receipt of the transmission signal from the RFID interrogator 2, the electronic tag 3 generates a response signal by controlling the reflectivity at the reception end to at least a first reflectivity and a second reflectivity higher than the first reflectivity. As a result, the RFID interrogator 2 receives a response signal with a sub-carrier changed in strength by being controlled to a different reflectivity.

The main controlling unit 23 includes a response-signal reception determining unit 33, a channel-setting controlling unit 34, and a product-availability determining unit 35. The response-signal reception determining unit 33 determines whether a response signal in response to the transmission signal is received from the electronic tag 3 within a predetermined time. The channel-setting controlling unit 34 changes the setting of the channel of a carrier frequency of the transmission signal. The product-availability determining unit 35 determines whether a product having the electronic tag 3 attached thereto is present in the communication area of the transmission signal.

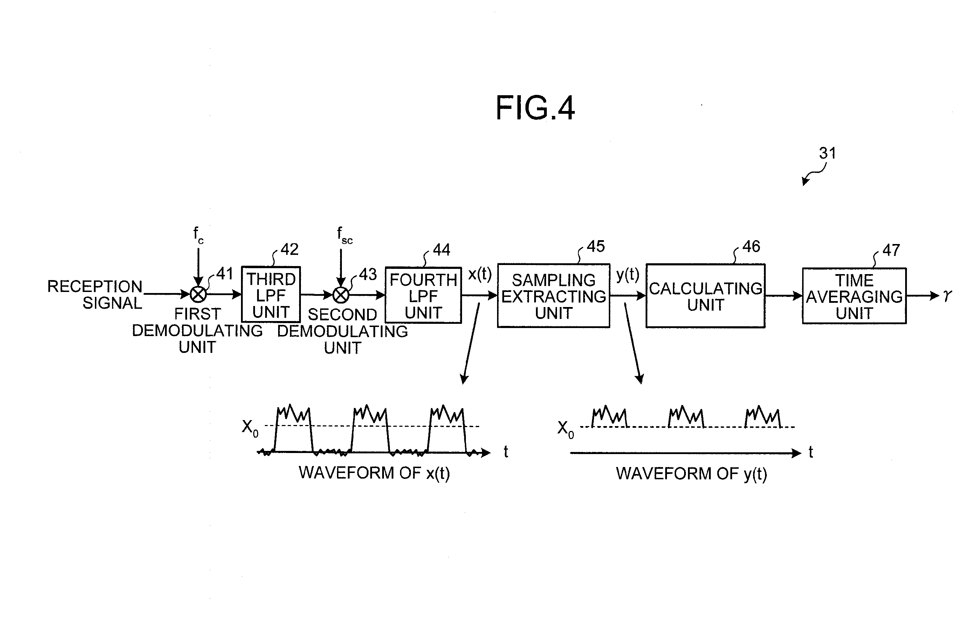

Fig. 4 is a schematic block diagram of the configuration of the tag-reception SINR estimating unit 31.

The tag-reception SINR estimating unit 31 depicted in Fig. 4 includes a first demodulating unit 41 and a third LPF unit 42. Upon receipt of the reception signal from the electronic tag 3 through the receiving unit 12 in the RF unit 10, the first demodulating unit 41 multiplies the reception signal by a center frequency fc of a main carrier (transmission signal) to demodulate the reception signal. The third LPF unit 42 performs a filtering process for removing high-frequency components of the reception signal demodulated by the first demodulating unit 41.

The tag-reception SINR estimating unit 31 further includes a second demodulating unit 43 and a fourth LPF unit 44. The second demodulating unit 43 multiplies the reception signal subjected to the filtering process by the third LPF unit 42 by a center frequency fsc of a sub-carrier (response signal) to demodulate the response signal included in the reception signal. The fourth LPF unit 44 performs a filtering process for removing high-frequency components of the response signal demodulated by the second demodulating unit 43.

The tag-reception SINR estimating unit 31 further includes a sampling extracting unit 45, a calculating unit 46, and a time averaging unit 47. The sampling extracting unit 45 sampling-extracts a waveform portion y(t) exceeding a predetermined threshold x0 from a waveform x(t) of the response signal subjected to the filtering process by the fourth LPF unit 44. The calculating unit 46 performs a calculation process of (distribution of the waveform portion y(t))/(the square of an average value of the waveform portion y(t)) based on the waveform portion y(t) extracted by the sampling extracting unit 45. The time averaging unit 47 takes a time average value obtained as a result of the calculation by the calculating unit 46 as a tag-reception SINR estimation value of the response signal. Here, the predetermined threshold x0 is set at, for example, a value obtained by multiplying a maximum value of the response signal by approximately 0.8.

The second demodulating unit 43, the fourth LPF unit 44, and the sampling extracting unit 45 extracts a signal portion of the response signal to which the second reflectivity is applied (a signal portion to which a reflectivity higher than the first reflectivity is applied) according to the strength of the reception signal.

The transmission controlling unit 32 variably controls the modulation index of the transmission signal to be transmitted to the electronic tag 3 so that the tag-reception SINR estimation value on an electronic tag 3 side estimated by the tag-reception SINR estimating unit 31 is a reception-allowable predetermined SINR value.

The predetermined SINR value corresponds to a reception-allowable SINR value allowing minimum reception of the transmission signal on the electronic tag 3 side. The setting range of a modulation index m by the transmission controlling unit 32 corresponds to be within a range of 0<0≤1.

Based on a tag-reception SINR estimation value γ estimated by the tag-reception SINR estimating unit 31 and a predetermined SINR value γ0, the transmission controlling unit 32 performs a process of sequentially updating the modulation index of the transmission signal at predetermined time intervals corresponding to an update time. Here, the modulation index depends on the side-lobe power of the spectrum of an ASK modulation signal. The transmission controlling unit 32 is assumed to include a table for managing the modulation index for each side-lobe power.

Thus, based on the tag-reception SINR estimation value γ, the predetermined SINR value γ0, and a side-lobe power P(t) of a current transmission signal, the transmission controlling unit 32 calculates a desired side-lobe power P(t+1) for update to obtain a minimum transmission modulation index allowing read and write of information from the RFID interrogator 2 to the electronic tag 3 by using an equation of P(t)*(γ0/γ).

The transmission controlling unit 32 includes a table for managing a modulation index m(t+1) calculated in advance for each desired side-lobe power P(t+1). When a desired side-lobe power P(t+1) is calculated, the transmission controlling unit 32 reads from the table a modulation index m(t+1) corresponding to the calculated side-lobe power P(t+1).

The transmission controlling unit 32 then sets the read modulation index m(t+1) as a minimum modulation index allowing read and write of information from the RFID interrogator 2 to the electronic tag 3.

After transmission of the transmission signal, within a predetermined time until a response signal in response to the transmission signal is received, based on the tag-reception SINR estimation value estimated by the tag-reception SINR estimating unit 31, the response-signal reception determining unit 33 determines whether a response signal in response to the transmission signal is received. For example, if the tag-reception SINR estimation value is smaller than the predetermined SINR value, it is determined that a response signal in response to the transmission signal is not received.

Based on sensor information of a sensor (not shown) detecting that a product having the electronic tag 3 of the communication target is in the communication area of the RFID interrogator 2, the product-availability determining unit 35 determines whether the product having the electronic tag 3 of the communication target is present in the communication area.

When it is determined by the response-signal reception determining unit 33 that a response signal is not received within the predetermined time and when it is determined by the product-availability determining unit 35 that the product is present in the communication area, the transmission controlling unit 32 variably controls the modulation index of the transmission signal to the electronic tag 3 attached to the product so that the modulation index is gradually increased.

A gradual increase amount of the modulation index m corresponds to a constant amount. Based on the current side-lobe power P(t) and a constant amount c, the desired side-lobe power P(t+1) is calculated by using an equation of P(t+1)=c*P(t), and a modulation index corresponding to the calculated desired side-lobe power P(t+1) is read from the table for output. Here, the constant c is c≥1.0.

When it is determined by the response-signal reception determining unit 33 that a response signal is not received within the predetermined time and when it is determined by the product-availability determining unit 35 that the product is not present in the communication area, the transmission controlling unit 32 prohibits the variable control setting of the modulation index of the transmission signal to the electronic tag 3 attached to the product.

When the modulation index of the transmission signal to the electronic tag 3 is the maximum modulation index and the state of not receiving a response signal in response to the transmission signal continues for a predetermined time in the response-signal reception determining unit 33, the transmission controlling unit 32 stops the transmitting operation of the data transmitting unit 21 for transmitting a transmission signal based on a probability result of a uniform random number.

When generating a uniform random number p in a range from 0 to 1 and obtaining a probability result that the uniform random number p is not smaller than a predetermined threshold p0, the transmission controlling unit 32 stops the transmitting operation of the data transmitting unit 21 for transmitting a transmission signal. When obtaining a probability result that the uniform random number p is smaller than a predetermined threshold p0, the transmission controlling unit 32 continues the transmitting operation of the data transmitting unit 21 for transmitting a transmission signal.

When stopping the transmitting operation of the data transmitting unit 21, the transmission controlling unit 32 transmits a transmission stop signal to the data transmitting unit 21 and the AM modulating unit 11B. In response to the transmission stop signal, the data transmitting unit 21 and the AM modulating unit 11B stops the operation of transmitting a transmission signal.

The channel-setting controlling unit 34 changes the setting of the communication channel of the transmission signal, and sets the changed communication channel to the local oscillator 13. The local oscillator 13 changes the setting of the oscillation frequency based on the changed communication channel.

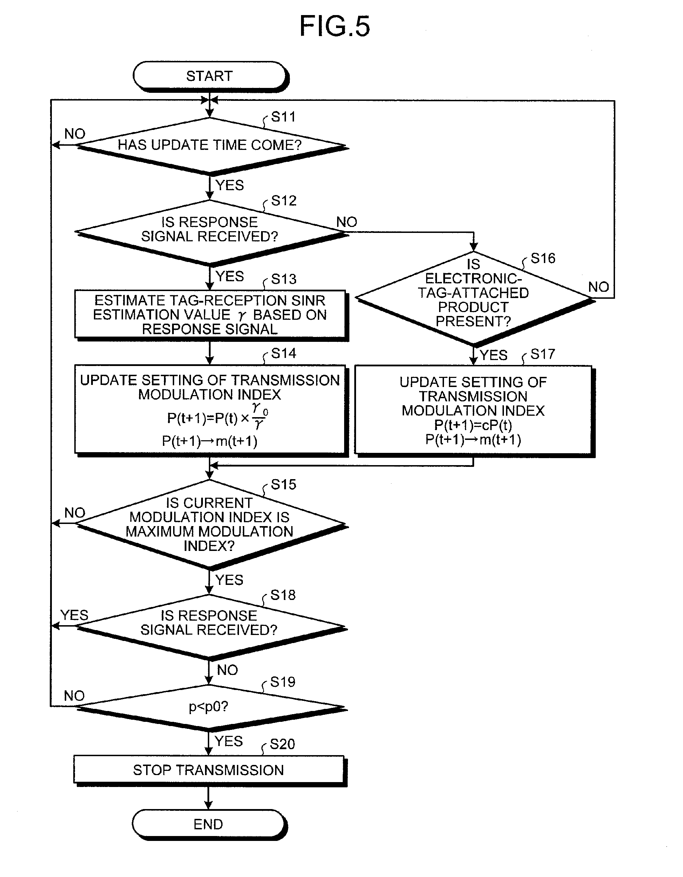

Next, the operation of the RFID tag system 1 according to the first embodiment is explained. Fig. 5 is a flowchart of the operation of the main controlling unit 23 in the MPU 20 related to a first transmission-modulation index updating process.

In the first transmission-modulation index updating process of Fig. 5, when a response signal is received from the electronic tag 3 in response to the transmission signal, the tag-reception SINR estimation value γ on the electronic tag 3 side is estimated and, based on the tag-reception SINR estimation value γ and the predetermined SINR value γ0, the modulation index of the transmission signal to the electronic tag 3 is variably controlled.

As depicted in Fig. 5, when the operation of transmitting a transmission signal for reading and writing information of the electronic tag 3 with a single channel is started through the data transmitting unit 21, the main controlling unit 23 in the MPU 20 of the RFID interrogator 2 determines whether the current time has reached an update time (step S11).

When it is determined that the current time has reached the update time (Yes at step S11), the response-signal reception determining unit 33 of the main controlling unit 23 determines whether a response signal in the reception signal in response to the transmission signal is received from the electronic tag 3 within a predetermined time (step S12).

When it is determined that a response signal is received within the predetermined time (Yes at step S12), the tag-reception SINR estimating unit 31 of the main controlling unit 23 estimates a tag-reception SINR estimation value γ on the electronic tag 3 side based on the response signal (step S13).

Based on the tag-reception SINR estimation value γ estimated by the tag-reception SINR estimating unit 31, the predetermined SINR value γ0, and the side-lobe power P(t) of the transmission signal, the transmission controlling unit 32 calculates a desired side-lobe power P(t+1) to obtain a minimum modulation index of the transmission signal allowing read and write of information from the RFID interrogator 2 to the electronic tag 3 by using the equation of P(t)*(γ0/γ).

Upon calculating a desired side-lobe power P(t+1), the transmission controlling unit 32 reads a modulation index (m+1) corresponding to the desired side-lobe power P(t++1) from the table, and updates the setting with the read modulation index (m+1) as a modulation index of the transmission signal from the data transmitting unit 21 (step S14). Here, the transmission controlling unit 32 updates the modulation index of the transmission signal to a minimum modulation index allowing read and write of information from the RFID interrogator 2 to the electronic tag 3. With this, signal interference with the electronic tag 3 managed by another RFID interrogator 2 and signal interference between the RFID interrogators 2 can be suppressed.

The transmission controlling unit 32 then determines whether the currently-set modulation index is a maximum modulation index (step S15). Here, the setting range of the modulation index m is within a range of 0<m≤1.

When the currently-set modulation index is not a maximum modulation index (No at step S15), the process moves to step S11, and the transmission controlling unit 32 determine whether the current time has reached the update time.

When it is determined by the response-signal reception determining unit 33 that a response signal to the electronic tag 3 is not received within the predetermined time (No at step S12), the product-availability determining unit 35 of the main controlling unit 23 determines whether the product having the electronic tag 3 attached thereto is in the communication area of the RFID interrogator 2 (step S16).

When the product having the electronic tag 3 attached thereto is in the communication area of the RFID interrogator 2 (Yes at step S16), based on the side-lobe power P(t) of the current transmission signal and the constant c, the transmission controlling unit 32 calculates a desired side-lobe power P(t+1) by using an equation of P(t)*c to increase the modulation index by the certain amount, where the constant c is c≥1.0.

Upon calculating the desired side-lobe power P(t+1), the transmission controlling unit 32 reads a modulation index (m+1) corresponding to the calculated desired side-lobe power P(t+1) from the table, updates the setting with the read modulation index (m+1) as a modulation index of the data transmitting unit 21 (step S17). The process moves to step S15, and the transmission controlling unit 32 determines whether the current modulation index m is a maximum modulation index. By increasing the modulation index by the constant amount, opportunities of receiving a response signal to the electronic tag 3 can be increased.

When the current modulation index m is a maximum modulation index (Yes at step S15), the response-signal reception determining unit 33 determines whether a response signal in response to the transmission signal is received from the electronic tag 3 (step S18).

When it is determined that a response signal is not received (No at step S18), the transmission controlling unit 32 determines that the transmission modulation index is a maximum modulation index, i.e., the state of not receiving a response signal in response to the transmission signal continues for a predetermined time, and then determines whether the uniform random number p is smaller than the predetermined threshold p0 (step S19).

When the uniform random number p is smaller than the predetermined threshold p0 (Yes at step S19), the transmission controlling unit 32 stops the operation of the data transmitting unit 21 and the AM modulating unit 11B to stop the operation of transmitting a transmission signal (step S20), and then ends the operation depicted in Fig. 5. When it is determined that the transmission modulation index is a maximum modulation index, the state of not receiving a response signal in response to the transmission signal continues for the predetermined time, and the uniform random number p is smaller than the predetermined threshold p0, the transmission controlling unit 32 determines that the communication environment is such that a response signal cannot be received from the electronic tag 3 even if the first transmission-modulation index updating process continues, and stops the transmitting operation.

When it is determined at step S11 that the current time has not reached the update time (No at step S11), the transmission controlling unit 32 continues to monitor whether the current time has reached the update time.

When it is determined at step S18 that a response signal is received (Yes at step S18), the process returns to step S11 to monitor whether the current time has reached the update time.

When it is determined at step S19 that the uniform random number p is not smaller than the predetermined threshold p0 (No at step S19), the process returns to step S11 to monitor whether the current time has reached the update time. When it is determined that the transmission modulation index is a maximum modulation index, the state of not receiving a response signal in response to the transmission signal continue for the predetermined time, or the uniform random number p is not smaller than the predetermined threshold p0, the transmission controlling unit 32 continues the transmitting operation, that is, with a certain probability. As a result, for example, by reducing a case such that a plurality of RFID interrogators 2 with their respective communication areas in which the electronic tags 3 are subjected to signal interference with one another simultaneously stop the transmitting operation, the number of RFID interrogators 2 whose transmitting operation unnecessarily stops can be reduced.

When it is determined at step S16 that a product having the electronic tag 3 attached thereto is not in the communication area (No at step S16), the product-availability determining unit 35 determines that the electronic tag 3 is not in the communication area, and avoids an unnecessary increase of the modulation index m. The process then returns to step S11 to monitor whether the current time has reached the update time.

With the first transmission-modulation index updating process depicted in Fig. 5, based on the tag-reception SINR estimation value γ on the electronic tag 3 side estimated from the response signal from the electronic tag 3, the setting of the modulation index of the transmission signal is updated to a minimum modulation index allowing read and write of information from the RFID interrogator 2 to the electronic tag 3. With this, signal interference with the electronic tag 3 managed by another RFID interrogator 2 and signal interference between the RFID interrogators 2 can be suppressed.

Moreover, when a response signal to the electronic tag 3 is not received within the predetermined time and the product having the electronic tag 3 attached thereto is in the communication area of the RFID interrogator 2, the modulation index of the transmission signal is increased by a constant amount. With this, opportunities of receiving a response signal to the electronic tag 3 can be increased.

Besides, when a response signal to the electronic tag 3 is not received within the predetermined time and the product having the electronic tag 3 attached thereto is not in the communication area of the RFID interrogator 2, an unnecessary increase of the modulation index m of the transmission signal can be avoided.

Further, when the transmission modulation index is a maximum modulation index, the state of not receiving a response signal in response to the transmission signal continues for the predetermined time, and the uniform random number p is smaller than the predetermined threshold p0, it is determined that the communication environment is such that a response signal cannot be received from the electronic tag 3, and the transmitting operation stops. With this, unnecessary continuation of the first transmission-modulation index updating process can be avoided.

Still further, when the transmission modulation index is a maximum modulation index, the state of not receiving a response signal in response to the transmission signal continue for the predetermined time, or the uniform random number p is not smaller than the predetermined threshold p0, the transmission controlling unit 32 continues the transmitting operation, that is, with a certain probability. Therefore, for example, by reducing a case such that a plurality of RFID interrogators 2 with their respective communication areas in which the electronic tags 3 are subjected to signal interference with one another simultaneously stop the transmitting operation, the number of RFID interrogators 2 whose transmitting operation unnecessarily stops can be reduced.

According to the first embodiment, based on the response signal from the electronic tag 3, an SINR value related to reception on the electronic tag 3 side is estimated as a tag-reception SINR estimation value γ, and the modulation index of the transmission signal to be transmitted from the RFID interrogator 2 to the electronic tag 3 is variably controlled so that this tag-reception SINR estimation value γ is the reception-allowable predetermined SINR value γ0. With this, for example, the modulation index of the transmission signal to be transmitted from the RFID interrogator 2 to the electronic tag 3 is suppressed at minimum as required. As a result, signal interference between the RFID interrogators 2 can be suppressed. Furthermore, by narrowing a separation distance between the RFID interrogators 2, high-density arrangement of the RFID interrogators 2 can be ensured. Still further, signal interference with the electronic tag 3 in a communication area of another RFID interrogator 2, that is, signal interference from the RFID interrogator 2 to the electronic tag 3, can be suppressed, and the number of communication channels to be allocated can be reduced, thereby improving efficiency of using frequencies.

Moreover, based on the tag-reception SINR estimation value γ on the electronic tag 3 side estimated from the response signal from the electronic tag 3, the setting of the modulation index of the transmission signal is updated to a minimum modulation index allowing read and write of information from the RFID interrogator 2 to the electronic tag 3. With this, signal interference with the electronic tag 3 managed by another RFID interrogator 2 and signal interference between the RFID interrogators 2 can be suppressed.

Furthermore, when a response signal to the electronic tag 3 is not received within the predetermined time and the product having the electronic tag 3 attached thereto is in the communication area of the RFID interrogator 2, the modulation index of the transmission signal is increased by a constant amount. With this, opportunities of receiving a response signal to the electronic tag 3 can be increased.

Still further, when a response signal to the electronic tag 3 is not received within the predetermined time and the product having the electronic tag 3 attached thereto is not in the communication area of the RFID interrogator 2, an unnecessary increase of the modulation index m of the transmission signal can be avoided.

Still further, when the transmission modulation index is a maximum modulation index, the state of not receiving a response signal in response to the transmission signal continues for the predetermined time, and the uniform random number p is smaller than the predetermined threshold p0, it is determined that the communication environment is such that a response signal cannot be received from the electronic tag 3, and the transmitting operation stops. With this, unnecessary continuation of the first transmission-modulation index updating process can be avoided.

Still further, when the transmission modulation index is a maximum modulation index, the state of not receiving a response signal in response to the transmission signal continue for the predetermined time, or the uniform random number p is not smaller than the predetermined threshold p0, the transmission controlling unit 32 continues the transmitting operation, that is, with a certain probability. Therefore, for example, by reducing a case such that a plurality of RFID interrogators 2 with their respective communication areas in which the electronic tags 3 are subjected to signal interference with one another simultaneously stop the transmitting operation, the number of RFID interrogators 2 whose transmitting operation unnecessarily stops can be reduced.

In the first embodiment, the RFID tag system 1 is exemplarily explained that adopts the RFID interrogator 2 that transmits a transmission signal to the electronic tag 3 of the transmission target with a single channel. An RFID tag system adopting the RFID interrogator 2 that transmits a transmission signal to the electronic tag 3 of the transmission target with an arbitrary communication channel selected from a plurality of communication channels can also achieve effects similar to those of the RFID tag system according to the first embodiment. Thus, technical details of such an RFID tag system are explained below as a second embodiment.

Components corresponding to those of the RFID tag system 1 according to the first embodiment are designated by the same reference numeral, and their explanation will not be repeated.

The RFID tag system 1 according to the first embodiment and an RFID tag system 1A according to the second embodiment are different in that, when it is determined that the current modulation index depicted in Fig. 5 is a maximum modulation index (Yes at step S15), a response signal in response to the transmission signal is not received (No at step S16), and the uniform random number p is smaller than the predetermined threshold p0 (Yes at step S17), instead of stopping the operation of transmitting the transmission signal, a transmission signal is transmitted by using a communication channel other than the communication channel currently in use.

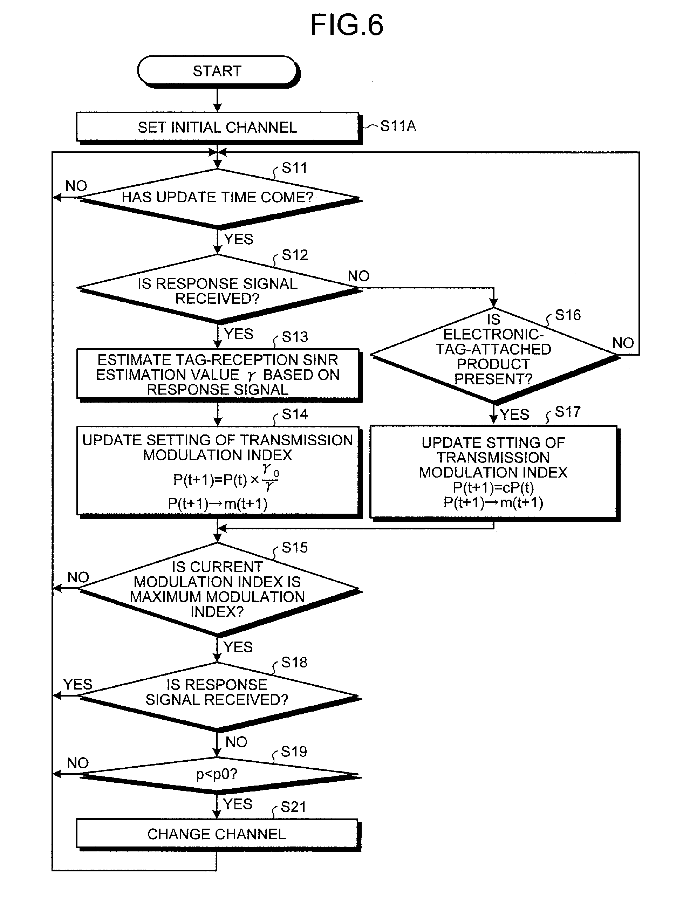

Next, the operation of an RFID tag system 1A according to the second embodiment is explained. Fig. 6 is a flowchart of the operation of the main controlling unit 23 in the MPU 20 related to a second transmission-modulation index updating process according to the second embodiment.

The channel-setting controlling unit 34 in the main controlling unit 23 depicted in Fig. 6 sets a communication channel at the time of transmitting a transmission signal to the electronic tag 3 of the communication target as an initial channel (step S11A). When the operation of transmitting a transmission signal for reading and writing information from and to the electronic tag 3 with the set channel starts, the process moves to step S11 and it is determined whether the current time has reached the update time.

Thereafter, the main controlling unit 23 performs the process from steps S11 through S19.

Then, when it is determined that the current modulation index is a maximum modulation index (Yes at step S15) and a response signal in response to the transmission signal is not received (No at step S16), i.e., the current modulation index is a maximum modulation index and the state of not receiving a response signal in response to the transmission signal continues for a predetermined time, and then also it is determined that the uniform random number p is smaller than the predetermined threshold p0 (Yes at step S17), the channel-setting controlling unit 34 changes the currently-set communication channel to another unassigned channel (step S21). The process then return to step S11 to determine whether the current time has reached the update time.

Here, the channel-setting controlling unit 34 notifies the local oscillator 13 of the changed communication channel, and the local oscillator 13 generates an oscillation frequency based on the changed communication channel. Based on the generated oscillation frequency, a transmission signal is transmitted to the electronic tag 3 of the communication target with a different communication channel.

With the second transmission-modulation index updating process depicted in Fig. 6, based on the tag-reception SINR estimation value γ on the electronic tag 3 side estimated from the response signal from the electronic tag 3, the setting of the modulation index of the transmission signal is updated to a minimum modulation index allowing read and write of information from the RFID interrogator 2 to the electronic tag 3. With this, signal interference with the electronic tag 3 managed by another RFID interrogator 2 and signal interference between the RFID interrogators 2 can be suppressed.

Moreover, when a response signal to the electronic tag 3 is not received within the predetermined time and the product having the electronic tag 3 attached thereto is in the communication area of the RFID interrogator 2, the modulation index of the transmission signal is increased by a constant amount. With this, opportunities of receiving a response signal to the electronic tag 3 can be increased.

Furthermore, when a response signal to the electronic tag 3 is not received within the predetermined time and the product having the electronic tag 3 attached thereto is not in the communication area of the RFID interrogator 2, an unnecessary increase of the modulation index m of the transmission signal can be avoided.

Still further, when it is determined that the transmission modulation index is a maximum modulation index, the state of not receiving a response signal in response to the transmission signal continues for the predetermined time, and the uniform random number p is smaller than the predetermined threshold p0, it is determined that the communication environment is such that a response signal cannot be received from the electronic tag 3, and a setting of a different communication channel is changed to continue the transmitting operation. With this, a transmission signal can be transmitted to the electronic tag 3 of the communication target with a different communication channel.

Still further, when it is determined that the transmission modulation index is a maximum modulation index, the state of not receiving a response signal in response to the transmission signal continue for the predetermined time, or the uniform random number p is not smaller than the predetermined threshold p0, the transmission controlling unit 32 continues the transmitting operation, that is, with a certain probability. Therefore, for example, by reducing a case such that a plurality of RFID interrogators 2 with their respective communication areas in which the electronic tags 3 are subjected to signal interference with one another simultaneously change the communication channel, the number of RFID interrogators 2 unnecessarily changing the communication channel can be reduced.

According to the second embodiment, based on the response signal from the electronic tag 3, an SINR value related to reception on the electronic tag 3 side is estimated as a tag-reception SINR estimation value γ, and the modulation index of the transmission signal to be transmitted from the RFID interrogator 2 to the electronic tag 3 is variably controlled so that this tag-reception SINR estimation value γ is the reception-allowable predetermined SINR value γ0. With this, for example, the modulation index of the transmission signal to be transmitted from the RFID interrogator 2 to the electronic tag 3 is suppressed at minimum as required. As a result, in the second embodiment, signal interference between the RFID interrogators 2 can be suppressed. Further, by narrowing a separation distance between the RFID interrogators 2, high-density arrangement of the RFID interrogators 2 can be ensured. Still further, signal interference with the electronic tag 3 in a communication area of another RFID interrogator 2, that is, signal interference from the RFID interrogator 2 to the electronic tag 3, can be suppressed, and the number of communication channels to be allocated can be reduced, thereby improving efficiency of using frequencies.

Moreover, based on the tag-reception SINR estimation value γ on the electronic tag 3 side estimated from the response signal from the electronic tag 3, the setting of the modulation index of the transmission signal is updated to a minimum modulation index allowing read and write of information from the RFID interrogator 2 to the electronic tag 3. With this, signal interference with the electronic tag 3 managed by another RFID interrogator 2 and signal interference between the RFID interrogators 2 can be suppressed.

Furthermore, when a response signal to the electronic tag 3 is not received within the predetermined time and the product having the electronic tag 3 attached thereto is in the communication area of the RFID interrogator 2, the modulation index of the transmission signal is increased by a constant amount. With this, opportunities of receiving a response signal to the electronic tag 3 can be increased.

Still further, when a response signal to the electronic tag 3 is not received within the predetermined time and the product having the electronic tag 3 attached thereto is not in the communication area of the RFID interrogator 2, an unnecessary increase of the modulation index m of the transmission signal can be avoided.

Still further, when the transmission modulation index is a maximum modulation index, the state of not receiving a response signal in response to the transmission signal continues for the predetermined time, and the uniform random number p is smaller than the predetermined threshold p0, it is determined that the communication environment is such that a response signal cannot be received from the electronic tag 3, and a setting of a different communication channel is changed to continue the transmitting operation. With this, a transmission signal can be transmitted to the electronic tag 3 of the communication target with a different communication channel.

Still further, when the transmission modulation index is a maximum modulation index, the state of not receiving a response signal in response to the transmission signal continue for the predetermined time, or the uniform random number p is not smaller than the predetermined threshold p0, the transmission controlling unit 32 continues the transmitting operation, that is, with a certain probability. Therefore, for example, by reducing a case such that a plurality of RFID interrogators 2 with their respective communication areas in which the electronic tags 3 are subjected to signal interference with one another simultaneously change the communication channel, the number of RFID interrogators 2 unnecessarily changing the communication channel can be reduced.

In the first and second embodiments, when the current modulation index is a maximum modulation index and the state of not receiving a response signal in response to the transmission signal continues for the predetermined time, the operation of transmitting a transmission signal is stopped or the communication channel of the transmission channel is changed with a certain probability based on the uniform random number. Alternatively, similar effects can be achieved by stopping the transmitting operation or changing the communication channel of the transmission signal without a certain probability based on the uniform random number.

Besides, in the first and second embodiments, an SINR value related to reception on the electronic tag 3 side is estimated as a tag-reception SINR estimation value. However, this is this is by way of example only and the SINR value is not necessarily used as long as reception quality of the electronic tag 3 can be estimated.

Of the processes described above, all or part of the processes explained as being performed automatically may be performed manually. Contrarily, all or part of the processes explained as being performed manually may be performed automatically. The processing procedures, the control procedures, specific names, and information including various data and parameters described above and illustrated in the drawings may be changed as required unless otherwise specified.

The constituent elements of the device described above are functionally conceptual, and need not be physically configured as illustrated. In other words, the specific mode of dispersion and integration of the constituent elements is not limited to the ones illustrated in the drawings.

All or any part of the processing functions performed by the device or the units can be realized by a central processing unit (CPU) or a microcomputer such as a memory control unit (MCU) and a micro processing unit (MPU), a program analyzed and executed by the CPU or the microcomputer such as the MCU and the MPU, or can be realized as hardware by wired logic.

As set forth hereinabove, according to an embodiment, with the use of a reflection signal from an electronic tag side, reception quality on the electronic tag side can be estimated.

Moreover, reception quality can be improved by adaptive modulation control.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions have been described in detail, it should be understood that the various changes, substitutions, and alterations could be made hereto without departing from the spirit and scope of the invention.

## Claims

1. An interrogating device that transmits a signal to an electronic tag that generates a response signal by controlling a reflectivity at a reception end to at least a first reflectivity and a second reflectivity higher than the first reflectivity, the interrogating device comprising:
a transmitting unit that transmits a transmission signal to the electronic tag;
a receiving unit that receives a response signal in response to the transmission signal from the electronic tag;
an extracting unit that extracts, from the response signal, a signal portion to which the second reflectivity is applied based on strength of a reception signal; and
an estimating unit that estimates reception quality in the electronic tag based on the signal portion extracted by the extracting unit.

2. An interrogating device comprising:
a transmitting unit that transmits a transmission signal to an electronic tag; and
a transmission controlling unit that controls, based on reception quality measured based on a response signal from the electronic tag, a modulation index to be applied to the transmission signal to be transmitted to the electronic tag.

3. A radio frequency identification (RFID) interrogator comprising:
a transmitting unit that transmits a transmission signal to an electronic tag;
a receiving unit that receives from the electronic tag a response signal in response to the transmission signal within a predetermined time after the transmission signal is transmitted from the transmitting unit;
a tag-reception SINR estimating unit that estimates a signal to interference plus noise ratio (SINR) value related to reception by the electronic tag as a tag-reception SINR estimation value based on the response signal received by the receiving unit from the electronic tag; and
a transmission controlling unit that controls the transmitting unit to variably control a modulation index of the transmission signal so that the tag-reception SINR estimation value estimated by the tag-reception SINR estimating unit is a reception-allowable predetermined SINR value.

4. The RFID interrogator according to claim 3, further comprising a response-signal reception determining unit that determines whether the response signal is received in response to the transmission signal from the electronic tag within the predetermined time, wherein
when the response-signal reception determining unit determines that the response signal is not received within the predetermined time, the transmission controlling unit controls the transmitting unit to gradually increase the modulation index of the transmission signal.

5. The RFID interrogator according to claim 4, further comprising an object-presence determining unit that determines whether an object attached with the electronic tag is present in a communication area of the transmission signal, wherein
when the response-signal reception determining unit determines that the response signal is not received within the predetermined time and the object-presence determining unit determines that no object is present in the communication area, the transmission controlling unit prohibits variable control of the modulation index of the transmission signal to the electronic tag attached to the object.

6. The RFID interrogator according to any of claims 3 to 5, wherein the predetermined SINR value corresponds to a reception-allowable SINR value allowing reception of the transmission signal by the electronic tag at a minimum.

7. The RFID interrogator according to any of claims 3 to 6, wherein the transmission controlling unit sets a variable range of a maximum modulation index to a minimum modulation index for variably controlling the modulation index of the transmission signal, and controls the transmitting unit to variably control the modulation index of the transmission signal within the variable range.

8. The RFID interrogator according to claim 7, wherein, when the modulation index of the transmission signal to the electronic tag is the maximum modulation index and state where the tag-reception SINR estimation value estimated based on the response signal in response to the transmission signal is smaller than the predetermined SINR value continues for a predetermined time, the transmission controlling unit stops the transmitting unit transmitting the transmission signal.

9. The RFID interrogator according to claim 7, wherein, when the modulation index of the transmission signal to the electronic tag is the maximum modulation index and state where the tag-reception SINR estimation value estimated based on the response signal in response to the transmission signal is smaller than the predetermined SINR value continues for a predetermined time, the transmission controlling unit stops the transmitting unit transmitting the transmission signal based on a probability of a predetermined random number.

10. The RFID interrogator according to any of claims 7 to 9, further comprising a channel selecting unit that selects from a plurality of communication channels a communication channel for the transmission signal, wherein
when the modulation index of the transmission signal to the electronic tag is the maximum modulation index and state where the tag-reception SINR estimation value estimated based on the response signal in response to the transmission signal is smaller than the predetermined SINR value continues for a predetermined time, the transmission controlling unit controls the channel selecting unit to change the communication channel for the transmission signal to another communication channel.

11. The RFID interrogator according to any of claims 7 to 9, further comprising a channel selecting unit that selects from a plurality of communication channels a communication channel for the transmission signal, wherein
when the modulation index of the transmission signal to the electronic tag is the maximum modulation index and state where the tag-reception SINR estimation value estimated based on the response signal in response to the transmission signal is smaller than the predetermined SINR value continues for a predetermined time, the transmission controlling unit controls the channel selecting unit to change the communication channel for the transmission signal to another communication channel based on a probability of a predetermined random number.

12. A radio frequency identification (RFID) interrogating method comprising:
transmitting a transmission signal to an electronic tag;
receiving from the electronic tag a response signal in response to the transmission signal within a predetermined time after the transmission signal is transmitted;
estimating a signal to interference plus noise ratio (SINR) value related to reception by the electronic tag as a tag-reception SINR estimation value based on the response signal from the electronic tag; and
controlling variably a modulation index of the transmission signal so that the tag-reception SINR estimation value is a reception-allowable predetermined SINR value.

13. The RFID interrogating method according to claim 12, further comprising determining whether the response signal is received in response to the transmission signal from the electronic tag within the predetermined time, wherein
the controlling includes gradually increasing, when the response signal is not received within the predetermined time, the modulation index of the transmission signal.

14. The RFID interrogating method according to claim 12 or 13, wherein the predetermined SINR value corresponds to a reception-allowable SINR value allowing reception of the transmission signal by the electronic tag at a minimum.

15. The RFID interrogating method according to any of claims 12 to 14, wherein the controlling includes setting a variable range of a maximum modulation index to a minimum modulation index for variably controlling the modulation index of the transmission signal, and controlling variably the modulation index of the transmission signal within the variable range.
